# EUROPÄISCHE PATENTANMELDUNG

(11) **EP 2 522 414 A1**
(43) Veröffentlichungstag der Anmeldung: **14.11.2012**
(21) Anmeldenummer: 11165669.0
(22) Anmeldetag: 11.05.2011
(51) Int. Cl.: B01D 33/46, B01D 33/60, B01D 33/66

(54) **Filtereinrichtung, Verfahren zu deren Betrieb sowie deren Verwendung**

(71) Anmelder: SIEMENS AKTIENGESELLSCHAFT, 80333 München (DE)
(72) Erfinder: Schmidt, Elisabeth, 09599, Freiberg (DE)

(57) **Zusammenfassung**

Die Erfindung betrifft eine Filtereinrichtung zum Filtrieren einer Suspension, umfassend mindestens einen Filter zur kontinuierlichen Erzeugung eines Filterkuchens enthaltend Partikel aus der Suspension, wobei der mindestens eine Filter eingerichtet ist, den Filterkuchen nacheinander mindestens einer Dosiereinrichtung zur Aufgabe mindestens einer ersten Waschflüssigkeit auf den Filterkuchen (4) und mindestens einer Bedampfungseinheit zur Bedampfung des Filterkuchens mittels Dampf zuzuführen, wobei weiterhin mindestens eine Abtragungseinrichtung zum Abtragen einer dem Filter abgewandten Oberflächenschicht des Filterkuchens vorhanden ist. Die Erfindung betrifft weiterhin ein Verfahren zum Betreiben der Filtereinrichtung sowie deren Verwendung.

## Beschreibung

Die Erfindung betrifft eine Filtereinrichtung zum Filtrieren einer Suspension, umfassend mindestens einen Filter zur kontinuierlichen Erzeugung eines Filterkuchens enthaltend Partikel aus der Suspension, wobei der mindestens eine Filter eingerichtet ist, den Filterkuchen nacheinander mindestens einer Dosiereinrichtung zur Aufgabe mindestens einer ersten Waschflüssigkeit auf den Filterkuchen und mindestens einer Bedampfungseinheit zur Bedampfung des Filterkuchens mittels Dampf zuzuführen. Die Erfindung betrifft weiterhin ein Verfahren zum Betrieb der Filtereinrichtung sowie eine Verwendung der Filtereinrichtung zur Extraktion von Kohlenwasserstoffen aus Ölsand.

Bei einem Ölsand handelt es sich üblicherweise um eine Mischung aus Tonsubstanz, Silikaten, Wasser und Kohlenwasserstoffen. Die in Ölsanden bis zu etwa 18 % enthaltene Ölphase aus diversen Kohlenwasserstoffen weist eine sehr unterschiedliche, oft dem Abbaugebiet spezifische Zusammensetzung auf, wobei Bitumen, Rohöl und Asphalt enthalten sein können. Die Aufbereitung von Ölsand wird mit dem Ziel der Trennung der Gesteins- bzw. Sandfraktion umfassend Tonsubstanz und Silikate vom eigentlichen Wertstoff, also der Ölphase umfassend die Kohlenwasserstoffe, durchgeführt.

Der Abbau von Ölsanden erfolgt häufig im Tagebau. Bei einem Abbau aus tieferen Erdschichten erfolgt oft eine Vorbearbeitung, bei der Dampf in die Lagerstätte eingeleitet, die Kohlenwasserstoffe verflüssigt und in Produktionsrohren gesammelt und zutage gefördert werden.

Die US 4,240,897 beschreibt ein Verfahren zur Extraktion von Bitumen aus Ölsand mittels heißen Wassers.

Die DE 10 2007 039 453 A1 beschreibt ein Verfahren zur Gewinnung von Bitumen aus Ölsand-Wasser-Mischungen mittels Flotation.

Gemäß dem sogenannten CLARK-ROWE-Prozess wird Ölsand mit Natronlauge und heißem Wasser gemischt und dadurch die Ölphase mobilisiert. Es erfolgt eine Phasentrennung wässerig-ölig primär durch Flotation. Der verbleibende Gesteins- oder Sandanteil enthält nach der Extraktion noch bis zu 20% der Ölphase, das zum Teil an der Oberfläche der Feinstpartikel adsorptiv gebunden ist. Dies führt zu einer sterischen Stabilisierung dieser Partikel im Abwasserstrom des Prozesses, wodurch eine Abtrennung dieser Partikel stark erschwert ist. Ferner wird eine merkliche Menge an Tonsubstanz durch eine adsorptive Anlagerung der Ölphase so stark hydrophobisiert, dass diese während einer Flotation in das Produkt, d.h. die abgetrennte Ölphase, gelangt. Dort stellt die Tonsubstanz eine qualitätsmindernde Verunreinigung dar, die nur schwer wieder abgeschieden werden kann. Je nach Ölsand-Zusammensetzung wird daher zur Gewinnung eines Barrels an Ölphase etwa die zweibis fünffache Menge an nicht recycelbarem Frischwasser benötigt. Das Wasser wird mit der abgetrennten Gesteins- oder Sandfraktion in Auffangbecken zwischen- oder endgelagert.

Die US 4,968,412 beschreibt ein zweistufiges Verfahren zur Entfernung von Bitumen aus Ölsand, bei dem in einem ersten Schritt eine Zugabe von organischem Lösungsmittel und eine Abtrennung der Tonsubstanz erfolgen. In einem zweiten Schritt wird eine Waschung des aufbereiteten Ölsands mit Wasser unter Tensid-Zugabe durchgeführt.

Die US 3,542,666 beschreibt ein Verfahren zur Extraktion von Kohlenwasserstoffen aus Ölsand, bei dem organische Lösungsmittel in Kombination mit einer geringen Menge an Wasser in bestimmten Mengenverhältnissen mit dem Ölsand zu einer Suspension vermischt und der pH-Wert der Suspension auf mindestens 5 eingestellt wird, bevor eine Filtration der Suspension erfolgt.

Die nicht vorveröffentlichte europäische Patentanmeldung mit dem Aktenzeichen EP 10156735 beschreibt ein Verfahren zur Extraktion von Kohlenwasserstoffen aus Ölsand. Es hat sich gezeigt, dass eine Verwendung rein organischer Extraktionsmittel dazu führt, dass Feinstbestandteile im Ölsand, die überwiegend aus Tonsubstanz bestehen, agglomerieren und die Agglomerate zudem ein hydrophobes Verhalten zeigen. Dies ermöglicht eine Abtrennung der Tonsubstanz mit der Gesteins- und Sandfraktion mittels einer mechanischen Fest-Flüssig-Filtration. Dabei wird der Ölsand mit organischem Lösungsmittel suspendiert und mittels eines kontinuierlichen Filters, insbesondere Trommelfilters, filtriert. Der gebildete Filterkuchen wird in einer Filtereinrichtung mittels mindestens einer ersten Waschflüssigkeit gewaschen und anschließend mit einem, aus einer zweiten Waschflüssigkeit gebildeten Dampf bedampft, wobei im Filterkuchen noch vorhandene Reste der ersten Waschflüssigkeit(en) inklusive eventueller Kohlenwasserstoffreste ausgetrieben werden. Der Filterkuchen wird dabei gereinigt und weitgehend entfeuchtet. Dabei kann die Aufgabe der ersten Waschflüssigkeit(en) auf den Filterkuchen mittels einer Dosiereinrichtung erfolgen, die z.B. durch Düsen realisiert ist.

Das Austreiben der Restmenge an erster Waschflüssigkeit aus dem Filterkuchen wird in der Literatur auch als Dampf-Druckfiltration (engl.: Steam Pressure Filtration) bezeichnet.

Die Grundlagen zur Dampf-Druckfiltration sind bekannt und beispielsweise in den folgenden Veröffentlichungen beschrieben:
"Steam Pressure Filtration: Mechanical-Thermal Dewatering Process", U.A. Peuker, W. Stahl, Drying Technology, 19(5), Seiten 807-848 (2001);
"Applying mechanical-thermal filtration processes for purification, e.g. solvent removal", U. A. Peuker, Proc. Filtech Europe, 12.-23. Oktober 2003, Düsseldorf, Deutschland;
"Abtrennung von organischen Lösemitteln aus Filterkuchen mit Dampf", U.A. Peuker, F & S Filtrieren und Separieren, Jahrgang 17 (2003), Nr. 5, Seiten 230 bis 236;
"Steam Pressure Filtration for the treatment of limey soils contaminated with aliphatic hydrocarbons", von M. Bottlinger, H. B. Bradl, A. Krupp, U. Peuker, 2nd Int. Containment & Remediation Technology Conference, 10.-13. Juni 2001, Orlando, Florida, USA;
Der Filterkuchen, umfassend die Gesteins- oder Sandfraktion des Ölsands, wird beim Hindurchdrücken des Dampfs von erster Waschflüssigkeit befreit und eine darin gelöste Menge an Kohlenwasserstoffen bzw. Ölphase damit ausgetrieben. Dies erhöht die Ausbeute an Kohlenwasserstoffen bzw. verbessert den Trennungsgrad auf etwa 95 bis 98 %, welcher den Trennerfolg charakterisiert.

Es hat sich gezeigt, dass bei manchen zu filtrierenden Suspensionen ein Filterkuchen mit einer Oberflächenschicht gebildet wird, die sich in ihrer Zusammensetzung vom Rest des Filterkuchens unterscheidet und das Waschen und Bedampfen des Filterkuchens erschwert. Im Fall von Suspensionen aus Ölsand und organischen Lösungsmitteln tritt dieser Fall beispielsweise dann auf, wenn der Gehalt an Bitumen in der Suspension hoch ist. Es bildet sich eine, den Filterkuchen nach oben abdichtende Oberflächenschicht enthaltend einen hohen Anteil an Asphalten-Tonsubstanz-Agglomeraten aus, die eine Durchströmung des Filterkuchens mit Waschflüssigkeit behindert oder unmöglich macht. Beim Auftreten solcher Zusammensetzungen der zu filtrierenden Suspension ist die Ausbeute an Kohlenwasserstoffen aus dem Ölsand somit deutlich vermindert.

Es ist Aufgabe der Erfindung, eine Filtereinrichtung zum Filtrieren einer Suspension bereitzustellen, die jederzeit ein optimales Waschen des Filterkuchens mit Waschflüssigkeit ermöglicht. Weiterhin ist es Aufgabe der Erfindung, ein Verfahren zum Betrieb und eine Verwendung einer solchen Filtereinrichtung anzugeben.

Die Aufgabe wird für die Filtereinrichtung zum Filtrieren einer Suspension, umfassend mindestens einen Filter zur kontinuierlichen Erzeugung eines Filterkuchens enthaltend Partikel aus der Suspension, wobei der mindestens eine Filter eingerichtet ist, den Filterkuchen nacheinander mindestens einer Dosiereinrichtung zur Aufgabe mindestens einer ersten Waschflüssigkeit auf den Filterkuchen und mindestens einer Bedampfungseinheit zur Bedampfung des Filterkuchens mittels Dampf zuzuführen, dadurch gelöst, dass weiterhin mindestens eine Abtragungseinrichtung zum Abtragen einer dem Filter abgewandten Oberflächenschicht des Filterkuchens vorhanden ist.

Die Aufgabe wird für das Verfahren zum Betreiben einer erfindungsgemäßen Filtereinrichtung dadurch gelöst, dass mittels der mindestens einen Abtragungseinrichtung eine dem Filter abgewandte Oberflächenschicht des Filterkuchens abgetragen wird.

Die mittels der erfindungsgemäßen Filtereinrichtung und des Verfahrens realisierte Abschälung der Oberflächenschicht des Filterkuchens vom restlichen Filterkuchen bzw. Restfilterkuchen noch vor der Durchführung eines Waschschritts am Filterkuchen mittels der mindestens einen Dosiereinrichtung ermöglicht es, das Waschen des Filterkuchens auch bei ungünstiger oder stark wechselnder Zusammensetzung der Suspension bei gleichbleibend hohem Durchsatz durchzuführen. Eine Durchströmbarkeit des Filterkuchens während des Waschschritts wird somit sichergestellt.

Ein Einsatz von organischen Lösungsmitteln als erste Waschflüssigkeit(en) und von Wasser als eine zweite Waschflüssigkeit zur Bildung von Dampf ist besonders bevorzugt. Details hierzu können der eingangs genannten EP 10156735 entnommen werden.

Die Dosiereinrichtung umfasst bevorzugt eine Anzahl an Düsen zur Aufgabe der ersten Waschflüssigkeit(en) auf den Filterkuchen, wobei die Düsen in einer Kammer oder Haube angeordnet sein können. Die auf den Filterkuchen aufgebrachte erste Waschflüssigkeit bildet einen Film, der vorzugsweise entgegen der Filterbewegung strömt. Sofern die Dosiereinrichtung in eine Kammer oder Haube integriert ist, kann die mindestens eine Abtragungseinrichtung an dieser Kammer oder Haube befestigt oder gehaltert sein.

Die Filtereinrichtung ist bevorzugt dazu eingerichtet, den Filterkuchen nacheinander der mindestens einen Abtragungseinrichtung, der mindestens einen Dosiereinrichtung und der mindestens einen Bedampfungseinheit zuzuführen. So wird die Oberflächenschicht vom Filterkuchen bereits vor einer Aufgabe von erster Waschflüssigkeit auf den Filterkuchen abgetrennt.

Es hat sich bewährt, wenn die mindestens eine Abtragungseinrichtung mindestens eine Strahldüse zur Abgabe von Gas in Richtung der Oberflächenschicht des Filterkuchens aufweist. Insbesondere wird von der mindestens einen Strahldüse Druckluft in Richtung des Filterkuchens geblasen, welche eine gezielte Abtragung der Oberflächenschicht bewirkt.

Alternativ oder in Kombination dazu kann die mindestens eine Abtragungseinrichtung mindestens ein mechanisches Abtragungselement umfassten, beispielsweise in Form eines Schneiddrahts, Schälmessers, Schabers oder dergleichen, welches die Oberflächenschicht vom Restfilterkuchen absondert, insbesondere abschneidet oder abschabt.

Dabei ist es von Vorteil, wenn eine Position der mindestens einen Strahldüse und/oder des mindestens einen mechanischen Abtragungselements relativ zum Filter veränderbar ist. Dadurch lässt sich eine Schichtdicke s der abzutrennenden Oberflächenschicht unmittelbar beeinflussen. Insbesondere ist eine Einstellung der Strahldüse(n) und/oder des Abtragungselements in einem Winkel α von etwa 70 bis 90° zur Horizontalen bevorzugt.

Die Filtereinrichtung weist vorzugsweise mindestens eine Messeinrichtung zur Erfassung einer Dicke d und/oder Farbe des Filterkuchens auf, wobei die mindestens eine Abtragungseinrichtung eingerichtet ist, die Oberflächenschicht in einer Schichtdicke s abzutragen, die in Abhängigkeit der Dicke d und/oder Farbe des Filterkuchens gewählt ist/wird. Alternativ oder in Kombination kann mittels einer Messeinrichtung auch eine Zusammensetzung der zu filtrierenden Suspension erfasst und die Oberflächenschicht in einer Schichtdicke s abgetragen werden, die in Abhängigkeit der Zusammensetzung der Suspension gewählt ist/wird.

Besonders bevorzugt erfolgt die Positionierung von Strahldüsen und/oder Abtragungselementen automatisch in Abhängigkeit von einer Dicke d des gebildeten Filterkuchens, einer Farbe der Oberflächenschicht des Filterkuchens, einer Zusammensetzung der Suspension, bzw. in Abhängigkeit von Parametern, die in direktem Zusammenhang mit der Zusammensetzung der Oberflächenschicht stehen. Bei einem Anstieg der Dicke d des Filterkuchens ist davon auszugehen, dass ein geringer Anteil an Asphalt-Tonsubstanz-Agglomeraten vorliegt und daher die Schichtdicke s der abzutragenden Oberflächenschicht verringert werden kann. Die Bestimmung der Farbe der Oberflächenschicht des Filterkuchens ermöglicht häufig Rückschlüsse auf deren Zusammensetzung und in Folge auf ihre Durchlässigkeit für Waschflüssigkeit(en).

Um eine automatische Verstellung von Strahldüsen und/oder Abtragungselemente zu erreichen, werden diese über eine Antriebseinheit, insbesondere einen Stellmotor, bewegt. Die Antriebseinheit wird über eine Steuer- oder Regeleinrichtung gesteuert oder geregelt, an welche die mindestens eine Messeinrichtung Messdaten übermittelt.

Eine Steuerung oder Regelung der Gasmenge, die auf den Filterkuchen aufgegeben wird, kann ebenfalls erfolgen. Dazu wird mittels einer Steuer- oder Regeleinrichtung ein Ventil oder Gebläse gesteuert oder geregelt, wobei eine den Strahldüsen zugeführte Gasmenge verändert wird. Je höher der Gasdruck, desto höher ist die Gasgeschwindigkeit und die Abtragleistung des Gasstroms im Bereich der Oberfläche des Filterkuchens, so dass auf diesem Weg ebenfalls die Schichtdicke s der abzutragenden Oberflächenschicht beeinflusst werden kann.

Weiterhin ist bevorzugt mindestens eine Transporteinrichtung zum Abtransport der abgetragenen Oberflächenschicht des Filterkuchens vorhanden. Diese kann durch eine Rutsche, einen Abwurfschacht oder dergleichen realisiert sein. Alternativ oder in Kombination kann als Transporteinrichtung ein angetriebener Förderer, wie z.B. ein Förderband usw., eingesetzt werden.

Die mindestens eine Abtragungseinrichtung ist insbesondere eingerichtet, die Oberflächenschicht in einer Schichtdicke s im Bereich von bis zu 10 % der Dicke d des Filterkuchens abzutragen. Bevorzugt wird die Oberflächenschicht in einer Schichtdicke s im Bereich von 2 bis 5 % der Dicke d des Filterkuchens abgetragen. Dadurch wird ein zuverlässiges Abschälen der verdichteten Oberflächenschicht erreicht.

In einer bevorzugten Ausgestaltung der Filtereinrichtung ist der mindestens eine Filter ein Drehfilter. Besonders bevorzugt ist der mindestens eine Filter ein Trommelfilter oder ein Scheibenfilter oder ein Panfilter oder ein Bandfilter.

Bei dem erfindungsgemäßen Verfahren wird die zu filtrierende Suspension bevorzugt aus Ölsand und mindestens einem organischen Lösungsmittel gebildet.

Die Verwendung der erfindungsgemäßen Filtereinrichtung zur Extraktion von Kohlenwasserstoffen aus Ölsand, wobei aus dem Ölsand und mindestens einem organischen Lösungsmittel die zu filtrierende Suspension gebildet wird, hat sich bewährt.

Zu weiteren Details hierzu wird auf die eingangs genannte EP 10156735 verwiesen.

Die Dicke des gebildeten Filterkuchens liegt bevorzugt im Bereich von 2 bis 100 mm, vorzugsweise im Bereich von 5 bis 25 mm. Ein aus Rückständen von Ölsand gebildeter Filterkuchen ist nach seiner Bedampfung mit Wasserdampf frei von organischen Lösungsmitteln und flüchtigen Kohlenwasserstoffen und kann unmittelbar, z.B. im Bereich der Abbaustelle des Ölsands, ins Erdreich rückverfüllt werden. Eine separate Lagerung der abgetrennten Gesteins- oder Sandfraktion entfällt. Lediglich ein geringer Anteil an schwerflüchtigen Kohlenwasserstoffen kann noch enthalten sein.

Die abgesonderte Oberflächenschicht 4a weist im Falle einer Filtration von Ölsand eine große Menge an Asphalten-Tonsubstanz-Agglomeraten auf, die bevorzugt mittels mindestens einer organischen Flüssigkeit resuspendiert und einem Dekanter zugeführt wird. Es erfolgt eine Trennung der festen Bestandteile von den noch enthaltenen organischen Bestandteilen bzw. Kohlenwasserstoffen, wobei die festen Bestandteile gegebenenfalls anschließend ebenfalls rückverfüllt werden können.

Als organisches Lösungsmittel, welches mit dem Ölsand suspendiert wird, wird vorzugsweise ein Gemisch von mindestens zwei unterschiedlichen organischen Lösungsmitteln eingesetzt. Besonders bevorzugt sind hierbei Gemische umfassend mindestens zwei organische Lösungsmittel aus der Gruppe Toluol, Benzol, Heptan und Hexan, aber auch andere organische Lösungsmittel sind hier einsetzbar. Auch ein reines organisches Lösungsmittel, vorzugsweise in Form von Toluol oder Heptan, kann alternativ zusammen mit dem Ölsand zur Bildung der zu filtrierenden Suspension eingesetzt werden. Ebenso ist es möglich, technische Lösungsmittel, wie Paraffin, Naphta, Benzin oder Kerosin mit herstellungsbedingt schwankender chemischer Zusammensetzung einzusetzen.

Die chemische Zusammensetzung der eingesetzten organischen Lösungsmittel und der ersten Waschflüssigkeit(en) wird dabei bevorzugt in Abhängigkeit von einem Gehalt des Ölsands an Molekülen enthaltend ≥ 10 Kohlenstoffatome, insbesondere voluminösen Molekülen aus der Gruppe der Cycloalkane und/oder Naphthensäuren und/oder Asphaltene, ausgewählt. Dazu erfolgt vorzugsweise eine Bestimmung des Gehalts des Ölsands an solchen Molekülen.

Bei einer rein aliphatischen Extraktion hat sich nämlich eine Löslichkeit von derartigen voluminösen Molekülen in einigen organischen Lösungsmitteln als problematisch erwiesen. So fallen beispielsweise bei einem Einsatz von Paraffinen als Extraktionsmittel die Cycloalkane und Naphthensäuren als gelartige Feststoffstrukturen aus. Dies reduziert die Ausbeute, fördert die Bildung einer den Filterkuchen abdichtenden Oberflächenschicht und verschlechtert die Prozessierbarkeit der Ölphase.

Die FIGen 1 bis 4 sollen mögliche erfindungsgemäße Filtereinrichtungen und Verfahren für deren Betrieb beispielhaft erläutern. So zeigt
- FIG 1: eine erste Filtereinrichtung mit einem kontinuierlichen Filter in Trommelform im Schnittbild;
- FIG 2: einen vergrößerten Ausschnitt aus FIG 1 im Bereich der Abtragungseinrichtung der ersten Filtereinrichtung;
- FIG 3: eine zweite Filtereinrichtung mit einem kontinuierlichen Filter in Trommelform im Schnittbild; und

- FIG 4: eine dritte Filtereinrichtung mit einem kontinuierlichen Filter in Trommelform im Schnittbild.

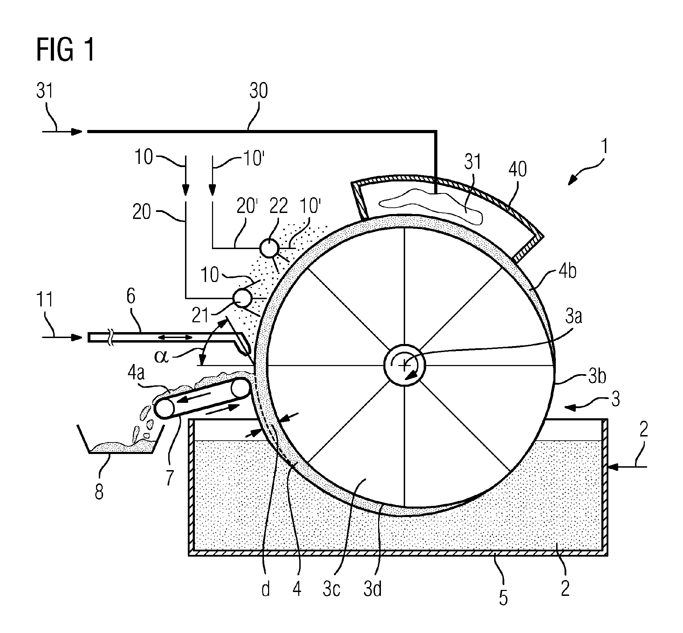

FIG 1 zeigt schematisch eine erste Filtereinrichtung 1 zum Filtrieren einer Suspension 2 im Schnittbild. Die Filtereinrichtung 1 umfasst hier einen Behälter 5 zur Aufnahme der Suspension 2, die dem Behälter 5 kontinuierlich zugeführt wird, sowie einen Filter 3 in Form eines kontinuierlichen Drehfilters. Der Drehfilter ist hier eine mit Filtergewebe 3b bespannte Trommel 3d, also ein Trommelfilter, mit mehreren, voneinander getrennten Filterkammern 3c. Der Trommelfilter taucht in die Suspension 2 ein und wird in Pfeilrichtung um eine Drehachse 3a rotiert (siehe Pfeil), wobei hier zumindest in einem Teil der Filterkammern 3c ein Druck herrscht, der geringer ist als jener oberhalb des Filtergewebes 3b. Dadurch wird Flüssigkeit aus der Suspension 2 durch das Filtergewebe 3b in die jeweilige Filterkammer 3c abgesaugt und es bildet sich auf dem Filtergewebe 3b ein Filterkuchen 4 aus, dessen Dicke d mit zunehmender Verweilzeit des Filtergewebes 3b in der Suspension 2 zunimmt.

Alternativ zu einer solchen Vakuumfiltration kann eine hyperbare Filtration durchgeführt werden, wobei sich der Raum außerhalb des Trommelfilters auf einem erhöhten Druckniveau befindet und Flüssigkeit der Suspension durch das Filtergewebe hindurch gedrückt wird. Dabei bildet sich ebenfalls ein Filterkuchen auf dem Filtergewebe aus.

Der Filterkuchen 4 umfasst filtrierbare Partikel der Suspension 2. Bei Einsatz einer Suspension 2, die beispielsweise aus Ölsand und organischen Lösungsmitteln gebildet ist, enthält der Filterkuchen 4 Tonsubstanz-Agglomerate sowie sonstige Partikel der Gesteins- und Sandfraktion des Ölsands. Es wird eine Extraktphase umfassend Kohlenwasserstoffe aus dem Ölsand und organische Lösungsmittel abgetrennt und im Bereich der Drehachse 3a des Trommelfilters aus den Filterkammern 3c abgeführt.

Aufgrund der kontinuierlichen Rotation des Trommelfilters um die Drehachse 3a taucht der gebildete Filterkuchen 4 an einer Seite aus der Suspension 2 auf. Der gebildete Filterkuchen 4 weist je nach Zusammensetzung der Suspension 2 eine mehr oder weniger dicke Oberflächenschicht 4a auf, die sich in ihrer Zusammensetzung vom Restfilterkuchen 4b unterscheidet. Dabei ist die Oberflächenschicht 4a häufig verdichtet bzw. weniger porös und für Waschflüssigkeiten schwerer zu durchdringen als der Restfilterkuchen 4b.

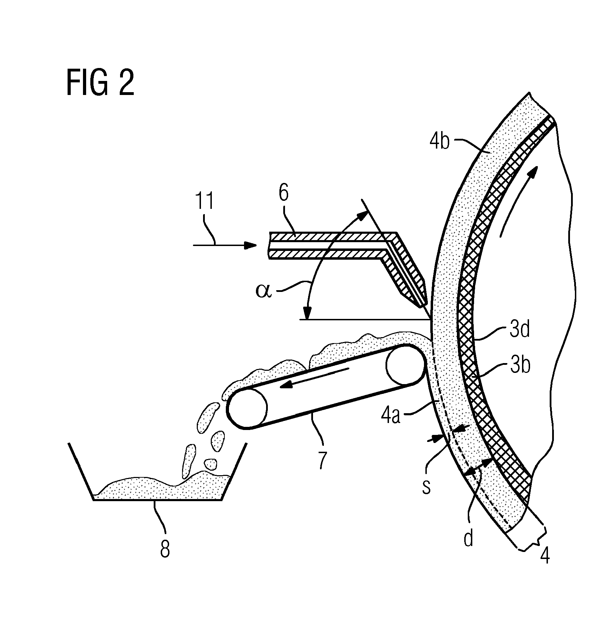

Der Filterkuchen 4 gelangt hier nach dem Austritt aus der Suspension 2 zuerst in den Bereich einer Abtragungseinrichtung 6. Die Abtragungseinrichtung 6 umfasst eine Strahldüse mit einem Gasaustrittsschlitz, der parallel zur Drehachse 3a des Filters 3 im Bereich des Filterkuchens 4 angeordnet ist. Dabei ist die Strahldüse im Hinblick auf ihren Abstand und Gasausströmwinkel zum Filterkuchen 4 verstellbar. Hier ist die Strahldüse in einem Winkel α von 75° zur Horizontalen auf den Filter 3 hin ausgerichtet. Es wird mittels der Abtragungseinrichtung 6 ein Gas 11, insbesondere ein Inertgas oder Luft, auf die dem Filtergewebe 3b abgewandte Oberfläche des Filterkuchens 4 aufgegeben und die Oberflächenschicht 4a über die gesamte Breite der Trommel 3d abgelöst. Siehe hierzu in FIG 2 auch den vergrößerten Ausschnitt aus FIG 1 im Bereich der Abtragungseinrichtung 6.

Je nach Auftragungswinkel des Gases 11, Abstand zum Filterkuchen 4 und eingesetzter Gasmenge wird dabei mehr oder weniger Material vom Filterkuchen 4 abgetragen. Das abgetragene Material bzw. die abgelöste Oberflächenschicht 4a wird über eine Transporteinrichtung 7 in Form eines angetriebenen Förderbands vom Filter 3 abtransportiert und in ein Auffangbecken 8 übergeben, wo es beliebig weiterbehandelt oder temporär gelagert werden kann.

Bei der hier nicht dargestellten, alternativen hyperbaren Filtration sind spezielle Austragseinrichtungen für einen Abtransport des abgetragenen Materials bzw. der abgelösten Oberflächenschicht 4a erforderlich, um einen Druckabfall im Raum außerhalb des Trommelfilters zu vermeiden. Als Austragseinrichtungen haben sich beispielsweise Austragsschnecken, Schaufelräder oder 2-Klappen-Systeme bewährt, die das abgetragene Material bzw. die abgelöste Oberflächenschicht 4a aus dem Raum mit erhöhtem Druck ausschleusen.

Der auf dem Filter 3 verbliebene Restfilterkuchen 4b wird anschließend aufgrund der kontinuierlichen Drehung der Trommel 3d einer Dosiereinrichtung 20, 20' umfassend Düsen 21, 22 zur Aufgabe mindestens einer ersten Waschflüssigkeit 10, 10' auf den Restfilterkuchen 4b zugeführt.

Danach wird der Restfilterkuchen 4b aufgrund der Drehbewegung der Trommel 3d einer Bedampfungseinheit 30 zur Bedampfung des Restfilterkuchens 4b mittels Dampf 31 zugeführt. Die Bedampfungseinheit 30 ist hier in Form eines Rohrs zur Dampfzuführung ausgeführt und in eine Haube 40 integriert.

Mittels der Dosiereinrichtung 20, 20' wird hier über die Düsen 21, 22 als erste Waschflüssigkeit 10, 10' ein organisches Lösungsmittel, beispielsweise aus einer Mischung von Toluol und Heptan, auf einer dem Filtergewebe 3b abgewandten Seite auf den Restfilterkuchen 4b aufgegeben. Die erste Waschflüssigkeit 10 verdrängt eine Restmenge an organischem Lösungsmittel, mit welchem die Suspension 2 gebildet wurde, inklusive darin gelöster Kohlenwasserstoffen aus dem Ölsand, aus dem offenen Porenraum des Restfilterkuchens 4b. Mittels der Dosiereinrichtung 20, 20' werden bevorzugt mehrere unterschiedliche erste Waschflüssigkeiten 10, 10' nacheinander auf den Restfilterkuchen 4b aufgebracht. Nachdem die, den Waschvorgang gegebenenfalls behindernde Oberflächenschicht 4a bereits entfernt wurde, erfolgt die Waschung des Restfilterkuchens 4b schnell, unkompliziert und mit hoher Ausbeute.

Der Restfilterkuchen 4b wird beispielsweise auf seiner dem Filtergewebe 3b abgewandten Seite zuerst mittels der Düsen 21 mit einer ersten Waschflüssigkeit 10, gebildet aus einer Mischung von Toluol und Heptan, und anschließend mittels der Düsen 22 mit einer weiteren ersten Waschflüssigkeit 10', aus reinem Hexan oder Heptan, beaufschlagt.

Die Haube 40 umgibt einen Teil des Trommelfilters. Der Dampf 31, hier in Form von Wasserdampf, wird über dem Restfilterkuchen 4b in die Haube 40 eingeleitet und durch diesen hindurch abgesaugt. Dabei wird eine sich noch im Restfilterkuchen 4b befindende Restmenge an erster Waschflüssigkeit umfassend aus dem Ölsand stammende Reste von Kohlenwasserstoffen entfernt. Der Dampf 31 wird durch den Restfilterkuchen 4b gedrückt und der Restfilterkuchen 4b so mechanisch und thermisch entfeuchtet.

Die jeweils in die Filterkammern 3c eindringenden Mengen an Extraktphase werden im Bereich der Drehachse 3a gesammelt und aus der ersten Filtereinrichtung 1 mittels einer hier nicht im Detail dargestellten Einheit, beispielsweise in Form eines Rohres, abgeführt. Als Filterrückstand verbleibt ein weitgehend entfeuchteter, lösemittelfreier Restfilterkuchen 4b, der vom Filtergewebe 3b beispielsweise durch Druckluft und/oder einen mechanischen Abstreifer entfernt und z.B. am Abbauort des verarbeiteten Ölsands ins Erdreich rückverfüllt werden kann. Die Abnahme des weitgehend entfeuchteten, lösemittelfreien Restfilterkuchens 4b vom Filtergewebe 3b ist hier zur besseren Übersicht allerdings nicht im Detail dargestellt.

Die mittels der ersten Filtereinrichtung 1 gewonnene Extraktphase wird z.B. zu einer Aufbereitungsanlage gefördert, welche die aus dem Ölsand extrahierten Kohlenwasserstoffe abtrennt und die eingesetzten organischen Lösungsmittel sortenrein trennt. Die sortenrein zurückgewonnenen Lösungsmittel können wiederverwendet werden. Dies ist hier allerdings der Übersichtlichkeit halber nicht im Detail dargestellt. Es wird hierzu auf den Inhalt der EP 10156735 verwiesen.

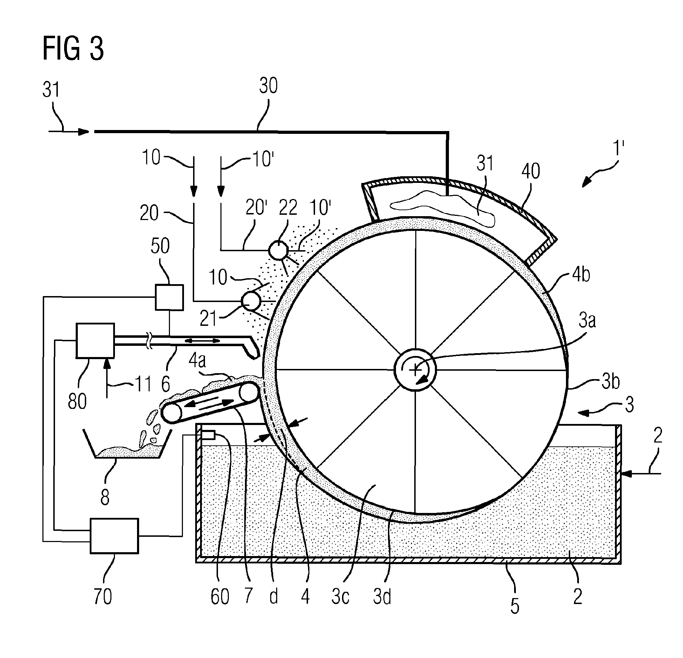

FIG 3 zeigt eine zweite Filtereinrichtung 1' ähnlich zu der in FIG 1, bei welcher eine Steuer- oder Regeleinrichtung 70 vorhanden ist. Gleiche Bezugszeichen wie in FIG 1 bezeichnen gleiche Elemente. Es ist hier weiterhin eine Messeinrichtung 60 zur Erfassung der Dicke d des Filterkuchens 4 vorhanden, welche den aktuellen Messwert für die Dicke d an die Steuer- oder Regeleinrichtung 70 übermittelt. Diese errechnet aus dem Messwert für die Dicke d des Filterkuchens 4 ein Signal zur Einstellung des Abstands zwischen Filterkuchen 4 und Abtragungseinrichtung 6, welches an eine Antriebseinheit 50 übermittelt wird. Die Antriebseinheit 50 bewirkt die Einstellung des, an die aktuelle Dicke d des Filterkuchens 4 angepassten Abstands. Die Position der Abtragungseinrichtung 6 wird in Abhängigkeit der Dicke d des Filterkuchens "online" eingestellt und somit durchgängig optimiert. Bei der Messeinrichtung 60 zur Erfassung der Dicke d des Filterkuchens 4 kann es sich um eine optische Messeinrichtung oder eine mechanische Messeinrichtung handeln. Die Steuer- oder Regeleinrichtung 70 ist hier weiterhin dazu eingerichtet ein Gebläse 80 anzusteuern, das die Gaszufuhrmenge an Gas 11 zur Abtragungseinrichtung 6 bestimmt, und die gewünschte Gaszufuhrmenge in Abhängigkeit der gemessenen Dicke d des Filterkuchens 4 vorzugeben.

Anstelle oder in Kombination zu einer Erfassung der Dicke d des Filterkuchens 4 kann die Farbe der Oberflächenschicht 4a des Filterkuchens 4 und/oder die Zusammensetzung der Suspension 2 mittels einer Messeinrichtung erfasst werden und die Schichtdicke s der abzutragenden Oberflächenschicht 4a in Abhängigkeit dieser Messwerte eingestellt werden.

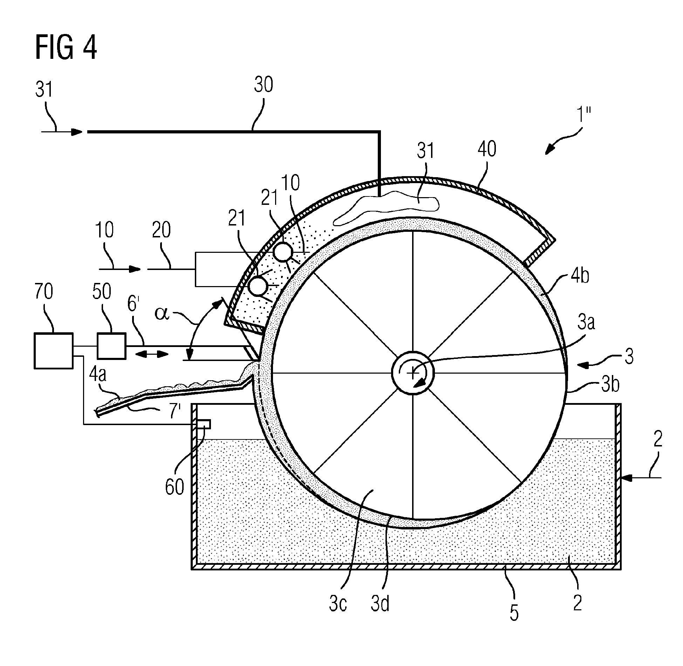

FIG 4 zeigt eine dritte Filtereinrichtung 1*''* ähnlich der in FIG 1. Gleiche Bezugszeichen wie in FIG 1 bezeichnen gleiche Elemente. Die Dosiereinrichtung 20 ist hier in die Haube 40 integriert angeordnet. Als Abtragungseinrichtung 6' ist ein Schneidmesser vorhanden, dessen Schneide parallel zur Drehachse 3a angeordnet ist und das die Oberflächenschicht 4a vom Filterkuchen 4 abträgt. Dabei ist die Position des Schneidmessers über eine Antriebseinheit 50 in Abhängigkeit von der Dicke d des Filterkuschens 4 verstellbar. Als Transporteinrichtung 7' ist eine Rutsche vorhanden, über die das abgetrennte Material abtransportiert wird.

Anstelle oder in Kombination zu einer Erfassung der Dicke d des Filterkuchens 4 kann auch hier die Farbe der Oberflächenschicht 4a des Filterkuchens 4 und/oder die Zusammensetzung der Suspension 2 mittels einer Messeinrichtung erfasst werden und die Schichtdicke s der abzutragenden Oberflächenschicht 4a in Abhängigkeit dieser Messwerte eingestellt werden.

Die FIGen 1 bis 4 zeigen lediglich Beispiele für mögliche erfindungsgemäße Filtereinrichtungen und Verfahren zu deren Betrieb. Ein Fachmann ist beispielsweise ohne weiteres in der Lage, anstelle des hier beispielhaft gezeigten Trommelfilters einen Bandfilter, Scheibenfilter oder anderen Drehfilter einzusetzen. Weiterhin können Abtragungseinrichtungen in Form von Schneiddrähten, Schabern und dergleichen eingesetzt werden sowie andere Messeinrichtungen oder Haubenkonstruktionen Verwendung finden. Anstelle der Vakuumfiltration kann auch eine hyperbare Filtration Anwendung finden.

## Patentansprüche

1. Filtereinrichtung (1, 1', 1*''*) zum Filtrieren einer Suspension (2), umfassend mindestens einen Filter (3) zur kontinuierlichen Erzeugung eines Filterkuchens (4) enthaltend Partikel aus der Suspension (2), wobei der mindestens eine Filter (3) eingerichtet ist, den Filterkuchen (4) nacheinander mindestens einer Dosiereinrichtung (20, 20') zur Aufgabe mindestens einer ersten Waschflüssigkeit (10, 10') auf den Filterkuchen (4) und mindestens einer Bedampfungseinheit (30) zur Bedampfung des Filterkuchens (4) mittels Dampf (31) zuzuführen, **dadurch gekennzeichnet, dass** weiterhin mindestens eine Abtragungseinrichtung (6, 6') zum Abtragen einer dem Filter (3) abgewandten Oberflächenschicht (4a) des Filterkuchens (4) vorhanden ist.

2. Filtereinrichtung nach Anspruch 1, **dadurch gekennzeichnet, dass** die Filtereinrichtung (1, 1', 1*''*) eingerichtet ist, den Filterkuchen (4) nacheinander der mindestens einen Abtragungseinrichtung (6, 6'), der mindestens einen Dosiereinrichtung (20, 20') und der mindestens einen Bedampfungseinheit (30) zuzuführen

3. Filtereinrichtung nach Anspruch 1 oder Anspruch 2, **dadurch gekennzeichnet, dass** die mindestens eine Abtragungseinrichtung (6) mindestens eine Strahldüse zur Abgabe von Gas (11) in Richtung der Oberflächenschicht (4a) des Filterkuchens (4) aufweist.

4. Filtereinrichtung nach einem der Ansprüche 1 bis 3, **dadurch gekennzeichnet, dass** die mindestens eine Abtragungseinrichtung (6') mindestens ein mechanisches Abtragungselement umfasst.

5. Filtereinrichtung nach einem der Ansprüche 1 bis 4, **dadurch gekennzeichnet, dass** eine Position der mindestens einen Strahldüse und/oder des mindestens einen mechanischen Abtragungselements relativ zum Filter (3) veränderbar ist.

6. Filtereinrichtung nach einem der Ansprüche 1 bis 5, **dadurch gekennzeichnet, dass** weiterhin mindestens eine Transporteinrichtung (7, 7') zum Abtransport der abgetragenen Oberflächenschicht (4a) des Filterkuchens (4) vorhanden ist.

7. Filtereinrichtung nach einem der Ansprüche 1 bis 6, **dadurch gekennzeichnet, dass** mindestens eine Messeinrichtung (60) zur Erfassung einer Dicke d und/oder Farbe des Filterkuchens (4) vorhanden ist und dass die mindestens eine Abtragungseinrichtung (6, 6') eingerichtet ist, die Oberflächenschicht (4a) in einer Schichtdicke s abzutragen, die in Abhängigkeit der Dicke d und/oder Farbe des Filterkuchens (4) gewählt ist.

8. Filtereinrichtung nach einem der Ansprüche 1 bis 7, **dadurch gekennzeichnet, dass** die mindestens eine Abtragungseinrichtung (6, 6') eingerichtet ist, die Oberflächenschicht (4a) in einer Schichtdicke s im Bereich von bis zu 10 % der Dicke d des Filterkuchens (4) abzutragen.

9. Filtereinrichtung nach einem der Ansprüche 1 bis 8, **dadurch gekennzeichnet, dass** der mindestens eine Filter (3) ein Drehfilter ist.

10. Filtereinrichtung nach einem der Ansprüche 1 bis 9, **dadurch gekennzeichnet, dass** der mindestens eine Filter (3) ein Trommelfilter oder ein Scheibenfilter oder ein Panfilter oder ein Bandfilter ist.

11. Verfahren zum Betreiben einer Filtereinrichtung (1, 1*'*, 1*''*) nach einem der Ansprüche 1 bis 10, **dadurch gekennzeichnet, dass** mittels der mindestens einen Abtragungseinrichtung (6, 6') eine dem Filter (3)abgewandte Oberflächenschicht (4a) des Filterkuchens (4) abgetragen wird.

12. Verfahren nach Anspruch 11, **dadurch gekennzeichnet, dass** eine Schichtdicke s der abzutragenden Oberflächenschicht (4a) in Abhängigkeit der Dicke d und/oder Farbe des Filterkuchens (4) eingestellt wird.

13. Verfahren nach Anspruch 11 oder 12, **dadurch gekennzeichnet, dass** die Oberflächenschicht (4a) in einer Schichtdicke s abgetragen wird, die im Bereich von bis zu 10 % der Dicke d des Filterkuchens (4) liegt.

14. Verfahren nach einem der Ansprüche 11 bis 13, **dadurch gekennzeichnet, dass** die Oberflächenschicht (4a) mittels eines Gasstroms und/oder des mechanischen Abtragungselements vom Filterkuchen (4) abgetrennt wird.

15. Verwendung einer Filtereinrichtung (1, 1*'*, 1*''*) nach einem der Ansprüche 1 bis 10 zur Extraktion von Kohlenwasserstoffen aus Ölsand, wobei aus dem Ölsand und mindestens einem organischen Lösungsmittel die zu filtrierende Suspension (2) gebildet wird.
